# EUROPÄISCHE PATENTSCHRIFT

(11) **EP 1 182 432 B1**
(45) Veröffentlichungstag und Bekanntmachung des Hinweises auf die Patenterteilung: **19.03.2014**
(21) Anmeldenummer: 01118861.2
(22) Anmeldetag: 16.08.2001
(51) Int. Cl.: G01F 1/684

(54) **Flusssensor mit Gehäuse**
Flow sensor with housing
Capteur de débit avec boîtier

(30) Priorität: 23.08.2000 CH 16442000
(43) Veröffentlichungstag der Anmeldung: 27.02.2002
(73) Patentinhaber: Sensirion Holding AG, 8712 Stäfa (CH)
(72) Erfinder: Mayer, Felix, 8052 Zürich (CH); Hornung, Mark R., 8049 Zürich (CH)
(74) Vertreter: Sutter, Kurt

(56) Entgegenhaltungen:
- EP-A- 0 172 669
- DE-A- 4 219 454
- DE-A- 19 614 459

## Beschreibung

Die Erfindung betrifft einen Flusssensor gemäss Oberbegriff von Anspruch 1.

Ein bekannter Flusssensor dieser Art besitzt ein zweiteiliges Gehäuse, welches einen Messkanal bildet. Ein Halbleiterchip mit einer Sensoranordnung ist an der Wand des Messkanals angeordnet. Zur Abdichtung wird der Halbleiterchip zwischen den Gehäuseteilen eingeklemmt.

Diese bekannte Lösung besitzt allerdings den Nachteil, dass sie nicht geeignet ist für Anwendungen, bei denen ein hoher statischer oder dynamischer Druck im Messkanal herrscht.

Die DE 196 14 459 A1 zeigt einen Drucksensor als elektronisches Bauelement, das in Dickfilmtechnik, Dünnfilmtechnik oder Siliziumtechnologie hergestellt ist und mit einer elektrisch isolierenden Schicht versehen ist, die von einer amorphen Metallschicht überdeckt wird. Das Bauelement ist in eine Halterung eingegliedert, sodass eine Membran des Drucksensors beidseitig fluidbeaufschlagbar ist.

In der DE 42 19 454 A1 wird ein Massenflusssensor vorgeschlagen, der zum Nachweis der Intensität eines Medienstromes dient. Der Massenflusssensor umfasst einen Messchip mit einer dielektrischen Membran und einem Rahmen aus einkristallinem Silizium. Auf der Membran ist mindestens ein Heizer angeordnet. Dieser Messchip ist in den Anströmkanal eines Gehäuses eingebaut. Durch die Ausgestaltung des Gehäuses wird die Verschmutzung des Messchips verringert, der thermische Ausgleich mit dem Medienstrom verbessert, die Beständigkeit des Sensors gegen plötzliche Druckschwankungen erhöht und die elektrische Kontaktierung verbessert.

Die EP 0 172 669 A1 zeigt eine Flusssensoranordnung, die einen Flusssensor mit einem Siliziumchip und darauf einen Heizwiderstand und zwei Temperaturmesswiderstände flussaufwärts und flussabwärts aufweist. Die Widerstände erstrecken sich als Dünnfilmwiderstände über einer geätzten Abgrabung im Chip. Die Anordnung enthält den Chip und einen Träger, auf dem der Chip angeordnet ist. Der Träger ist so geformt, dass er einen Flusskanal bereitstellt. Der Chip kann als Flip-Chip über dem Kanal angeordnet sein. Eine Betriebsschaltung ist ebenfalls auf den Träger integriert. Der Träger kann eine gedruckte Leiterplatte, ein Keramiksubstrat oder ein Halbleitersubstrat sein.

Es stellt sich deshalb die Aufgabe, einen Flusssensor mit Gehäuse bereitzustellen, welcher nötigenfalls auch grossem Druck im Messkanal standhält und der einfach aufgebaut ist.

Diese Aufgabe wird vom Flusssensor gemäss Anspruch 1 gelöst.

Erfindungsgemäss ist also zwischen den beiden Gehäuseteilen ein den Messkanal und den Halbleiterchip umgebender Dichtungsring vorgesehen, der gegen einen Gegenhalter drückt, wobei der Gegenhalter von einem der Gehäuseteile gebildet wird. Zur Verbindung des Halbleiterchips mit der Aussenwelt wird mindestens eine Leiterbahn zwischen dem Dichtungsring und dem Gegenhalter nach aussen geführt. Bei einer derartigen Anordnung braucht der Halbleiterchip keine Dichtungsfunktion zu übernehmen und die Montage ist einfach.

Vorzugsweise ist die mindestens eine Leiterbahn auf einer flexiblen Leiterbahnfolie angeordnet. Es ist jedoch auch möglich, die Leiterbahn direkt auf einem der Gehäuseteile zu befestigen.

Der Messkanal ist als Nut in der Oberfläche eines ersten Gehäuseteils ausgestaltet. Zur Verbindung der Nut mit der Aussenwelt sind Anschlussleitungen, z.B. in Form von Bohrungen bzw. Löchern, vorgesehen, die sich durch einen oder mehrere der Gehäuseteile erstrecken. Der Dichtungsring ist an der besagten Oberfläche um die Nut herum angeordnet. Durch diese Anordnung kann der Messkanal allseitig abgedichtet werden.

Vorzugsweise liegt der Halbleiterchip in einer Vertiefung des zweiten Gehäuseteils und seine Oberseite (d.h. die Seite, auf der sich die Sensoranordnung befindet) liegt bündig mit der Wand des Messkanals, so dass möglichst laminare Strömungsverhältnisse vorliegen. Zur genauen Positionierung der Oberseite des Halbleiterchips berührt diese den ersten Gehäuseteil. Vorzugsweise wird dabei im Boden der Vertiefung ein Abstandhalter vorgesehen, der durch die Andruckkraft der Gehäuseteile elastisch oder plastisch deformiert wird und den Halbleiterchip gegen den ersten Gehäuseteil drückt, so dass sich beim Zusammensetzen der Gehäuseteile eine genaue und dauerhafte Positionierung des Halbleiterchips relativ zum Messkanal ergibt. Der Abstandhalter kann z.B. von Erhebungen im Boden der Vertiefung gebildet werden.

Der erfindungsgemässe Flusssensor ist zur Messung des Flusses von Flüssigkeiten oder Gasen bei normalen oder erhöhten Druckverhältnissen geeignet.

Weitere bevorzugte Ausführungen und Vorteile ergeben sich aus den abhängigen Ansprüchen sowie der nun folgenden Beschreibung einer bevorzugten Ausführung anhand der Figuren. Dabei zeigen:
Fig. 1 eine Explosionsdarstellung einer ersten Ausführung des Flusssensors,
Fig. 2 den ersten Gehäuseteil vom zweiten Gehäuseteil her gesehen,
Fig. 3 den zweiten Gehäuseteil vom ersten Gehäuseteil her gesehen,
Fig. 4 einen Schnitt durch den Flusssensor im Bereich des Halbleiterchips quer zum Messkanal,
Fig. 5 einen Teilschnitt einer möglichen Ausführung des Halbleiterchips,
Fig. 6 einen Schnitt durch eine zweite Ausführung des Flusssensors
Fig. 7 einen Schnitt durch eine dritte Ausführung des Flusssensors, und
Fig. 8 einen Schnitt durch eine vierte Ausführung des Flusssensors.

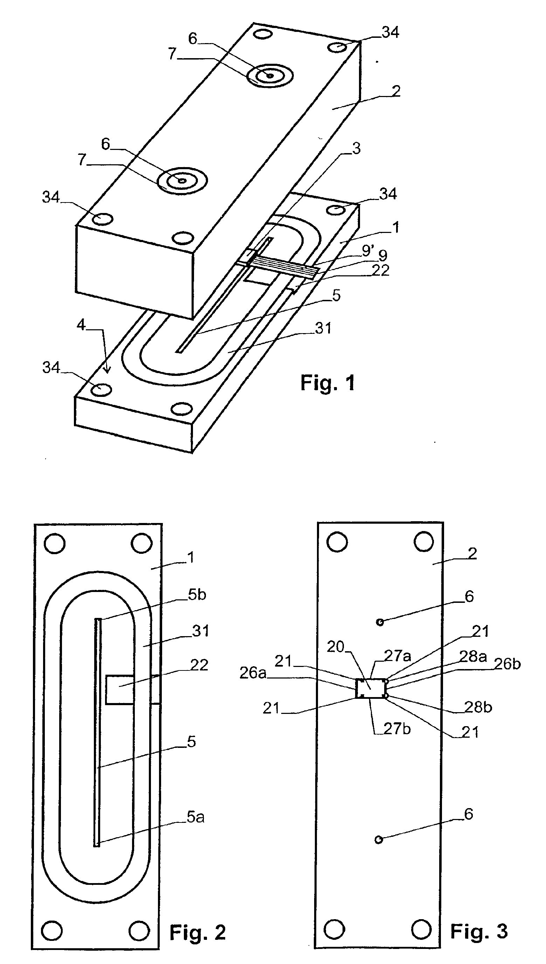

Der in den Figuren dargestellte Flusssensor besitzt einen ersten Gehäuseteil 1, einen zweiten Gehäuseteil 2 und einen im wesentlichen zwischen den Gehäuseteilen 1, 2 eingeklemmten Halbleiterchip 3. In Fig. 1 sind diese Teile beabstandet voneinander dargestellt. Im Betrieb liegen die Gehäuseteile 1, 2 jedoch aufeinander auf und klemmen den Halbleiterchip 3 zwischen sich ein.

In einer Oberfläche 4 des ersten Gehäuseteils 1 ist eine gerade Nut 5 angeordnet, die, zusammen mit dem angrenzenden zweiten Gehäuseteil 2, einen Messkanal bildet. Durch den zweiten Gehäuseteil 2 erstrecken sich zwei Anschlussleitungen 6, ausgestaltet als Bohrungen bzw. Löcher, die die Enden 5a, 5b des Messkanals mit der Aussenwelt verbinden. Auf der Aussenseite des zweiten Gehäuseteils 2 sind die Mündungen der Anschlussleitungen 6 von Dichtungen 7 umgeben, so dass sie z.B. mit einem zu messenden Rohr verbunden werden können.

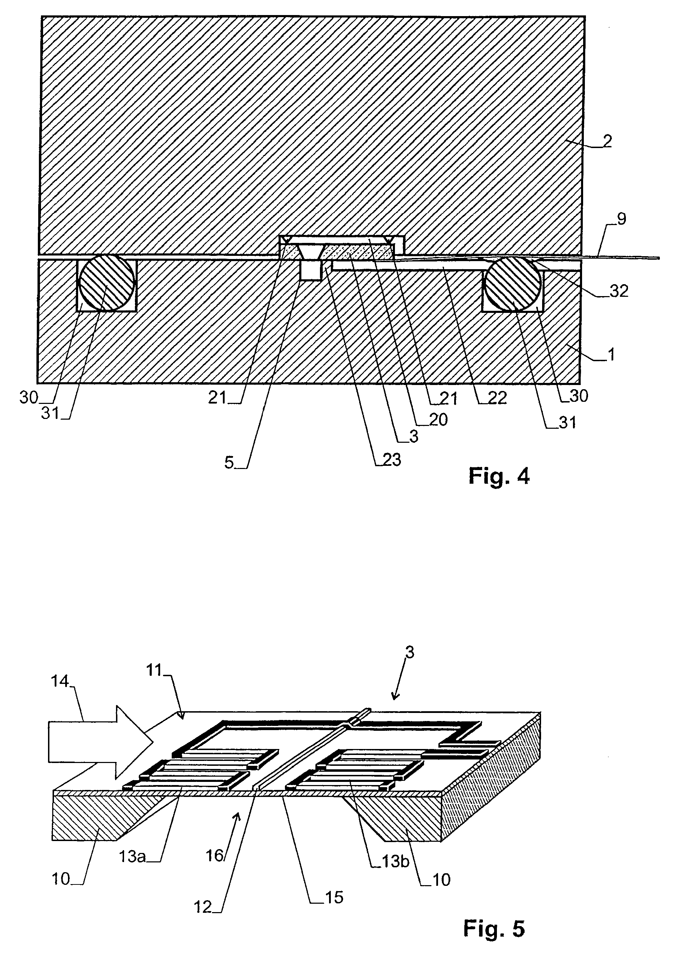

Ein möglicher Aufbau des Halbleiterchips 3 ist in Fig. 5 dargestellt. Er besitzt ein Halbleitersubstrat 10, auf dessen Oberseite 11 eine Sensoranordnung integriert ist. Diese umfasst in konventioneller Weise ein Heizelement 12 zwischen zwei Temperatursensoren 13a, 13b. Die Temperatursensoren 13a, 13b liegen in Flussrichtung 14 des zu messenden Mediums vor bzw. hinter dem Heizelement 12, so dass deren Temperaturdifferenz ein Mass für die Flussgeschwindigkeit bzw. den Massenfluss ist.

Die Sensoranordnung ist auf einer Membran 15 angeordnet, die über einer Öffnung 16 liegt, welche sich durch das Substrat 10 erstreckt.

Wie insbesondere aus Fig. 3 und 4 ersichtlich, liegt bei einer ersten Ausführung der Halbleiterchip 3 in einer Vertiefung 20 der ansonst flachen Innenseite des zweiten Gehäuseteils 2, wobei die Sensoranordnung dem Messkanal zugewandt ist. Er ist mit einer flexiblen Leiterbahnfolie 9 verbunden, die aus dem Sensor herausgeführt ist. Hierzu ist im ersten Gehäuseteil eine Vertiefung 22 vorgesehen. Die Leiterbahnfolie 9 besteht z.B. aus einem dünnen Kunststoffträger, auf oder in welchem Leiterbahnen 9' angeordnet sind. Die Gesamtdicke der Leiterbahnfolie 9 beträgt vorzugsweise weniger als 100 µm.

Zwischen der Vertiefung 22 und der Nut 5 befindet sich ein Steg 23, der auf dem Halbleiterchip 3 aufliegt. Am Boden der Vertiefung 20 sind als Abstandhalter vier pyramidenförmige Erhebungen 21 angeordnet. Der Halbleiterchip 3 wird vom zweiten Gehäuseteil gegen die Erhebungen 21 gedrückt, so dass letztere leicht verformt werden. Dadurch wird gewährleistet, dass der Halbleiterchip 3 bündig mit der Wand des Messkanals liegt.

Die Erhebungen 21 sind vorzugsweise einstückig mit dem zweiten Gehäuseteil verbunden. Sie müssen nicht pyramidenförmig sein, im undeformierten Zustand sollten sie jedoch vorzugsweise spitz zulaufen, so dass deren Spitzen mit geringem Kraftaufwand deformiert werden können. Sie können plastisch oder elastisch deformierbar sein.

Die Vertiefung 20 besitzt zwei Querseiten 26a, 26b (Fig. 3) parallel zum Messkanal und zwei Längsseiten 27a, 27b senkrecht zum Messkanal. An den Enden einer der Querseiten 26b sind zwei Ausbuchtungen 28a, 28b vorgesehen. Zwischen den Ausbuchtungen 28a, 28b verläuft die Querseite 26b gerade und bildet einen definierten Anschlag, der es erlaubt, den Halbleiterchip 3 quer zum Messkanal in exakter Weise zu positionieren. Die Ausbuchtungen sorgen dafür, dass der Halbleiterchip 3 nicht an allfälligen, herstellungstechnisch bedingten Rundungen an den Ecken der Vertiefung 20 ansteht.

Die Vertiefung 20 ist so bemessen, dass zwischen den Längsseiten 27a, 27b und dem Halbleiterchip 3 etwas Platz verbleibt, so dass der Bereich zwischen Halbleiterchip 3 und dem Boden der Vertiefung in Verbindung steht mit dem Messkanal. Auf diese Weise ist gewährleistet, dass beide Seiten der Membran 15 (Fig. 5) mit dem Messkanal in Verbindung stehen, so dass der Druckabfall über der Membran im wesentlichen gleich Null ist, wodurch Beschädigungen der Membran 15 durch hohe statische oder dynamische Drücke vermieden werden können.

Wie aus Fig. 1, 2 und 4 ersichtlich, verläuft im ersten Gehäuseteil 1 um die Nut 5 herum eine Vertiefung 30 in Form eines langgezogenen Kreises, in die ein Dichtungsring 31 eingelegt ist. Im montierten Zustand des Sensors wird der Dichtungsring 31 gegen die Innenseite des zweiten Gehäuseteils 2 gedrückt und dichtet somit den Messkanal im Bereich des Spalts zwischen den Gehäuseteilen 1, 2 nach aussen ab, d.h. der zweite Gehäuseteil 2 bildet einen Gegenhalter für den Dichtungsring.

Die Leiterbahnfolie 9 vom Halbleiterchip 3 wird zwischen dem Dichtungsring 31 und der Innenseite des zweiten Gehäuseteils 2 durchgeführt und vom Dichtungsring 31 beaufschlagt. Zur besseren Abdichtung kann im Bereich der Kreuzung zwischen Leiterbahnfolie 9 und Dichtungsring 31 eine Dichtungsmasse 32, z.B. Silikon, vorgesehen sein.

Wie aus Fig. 2 ersichtlich, ist der Halbleiterchip nicht in der Mitte der Nut 5 angeordnet. Vielmehr befindet er sich näher am Ausgangsende 5b als am Eingangsende 5a des Messkanals. Da das zu messende Medium von Eingangsende 5a zum Ausgangsende 5b strömt, ergeben sich durch die asymmetrische Anordnung des Halbleiterchips 3 näher am Ausgangsende 5b laminarere Strömungsverhältnisse am Messpunkt.

Die Gehäuseteile 1, 2 werden vorzugsweise spritzgusstechnisch vorgefertigt. Sodann werden der Dichtungsring 31 in die Vertiefung 30 und der Halbleiterchip 3 in die Vertiefung 20 eingelegt. Nun kann die Dichtungsmasse 32 im Bereich der Leiterbahnfolie 9 aufgebracht werden. Sodann werden die beiden Gehäuseteile 1, 2 aufeinander gelegt und durch Schrauben in Schraublöchern 34 miteinander verbunden.

Die Gehäuseteile 1, 2 können aus Kunststoff und/oder Metall sein. Insbesondere bei hohen Drücken ist es denkbar, die Gehäuse aus einem Gefüge aus Kunststoff und Metall zu fertigen, wobei das Metall dem Gehäuse die nötige Festigkeit verleiht und der Kunststoff im Bereich der Innenseiten vorgesehen ist, wo gute Dichtungs- und Deformationseigenschaften benötigt werden. Insbesondere kann auch der Dichtungsring als Dichtungsrippe aus Dichtmaterial spritzgusstechnisch direkt in den Gehäuseteilen ausgeformt werden.

In der vorliegenden Ausführung sind die Anschlussleitungen 6 im zweiten Gehäuseteil 2 angeordnet. Es ist jedoch auch denkbar, eine oder beide davon im ersten Gehäuseteil 1 vorzusehen. Andererseits könnte der Dichtungsring 31 auch im zweiten Gehäuseteil 2 montiert werden, oder es könnten in beiden Gehäuseteilen 1, 2 Dichtungsringe vorgesehen sein.

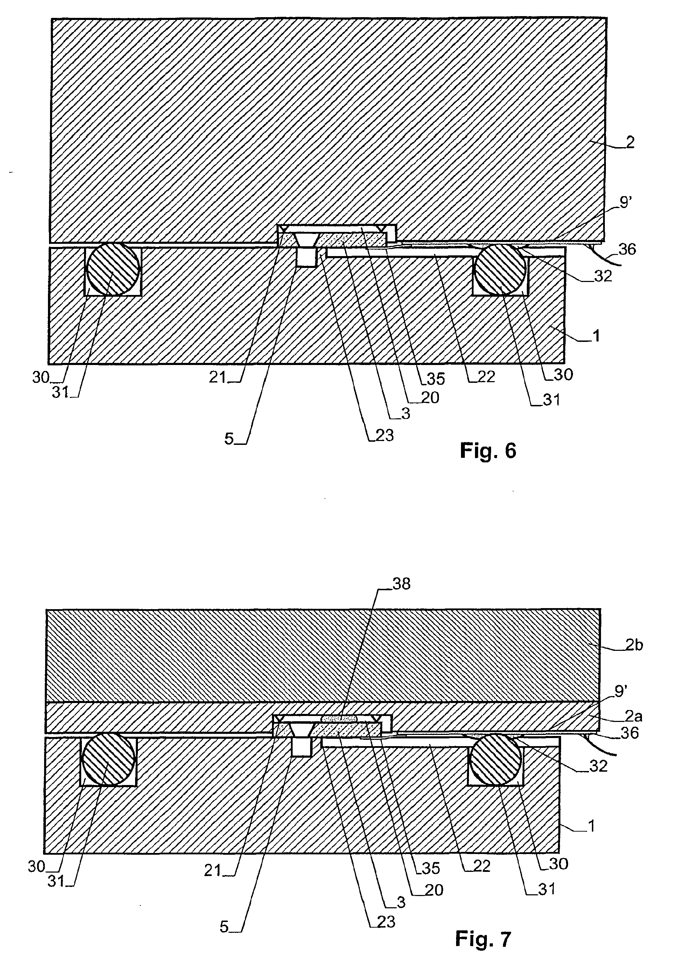

Eine zweite Ausführung des Sensors ist in Fig. 6 dargestellt, welche einen Schnitt entsprechend Fig. 4 der ersten Ausführung zeigt. Im Folgenden werden die Unterschiede zwischen der ersten und der zweiten Ausführung beschrieben.

Bei der zweiten Ausführung sind anstelle der Leiterbahnfolie 9 Leiterbahnen 9' vorgesehen, welche am zweiten Gehäuseteil 2 befestigt sind. Unter Leiterbahnen sind dabei von einer Beschichtung gebildete, elektrische Leitungen zu verstehen, die wesentlich breiter als dick sind, so dass sie keine allzu grosse Deformation des Dichtungsrings bewirken.

Damit die Leiterbahnen 9' nicht kurzgeschlossen werden, besteht der zweite Gehäuseteil 2 aus einem Isolator oder ist auf seiner Unterseite mit einer elektrisch isolierenden Schicht bedeckt. Die Leiterbahnen 9' sind Metallbahnen, die z.B. durch Galvanisierung auf dem zweiten Gehäuseteil 2 angebracht wurden. Zur Verbindung zwischen dem Halbleiterchip 3 und den Leiterbahnen 9' sind z.B. Bonddrähte 35 oder andere Verbindungsleitungen vorgesehen. An der Aussenseite des Gehäuses bilden die Leiterbahnen Anschlussstellen 36, welche z.B. mit Zuführungsdrähten oder Steckkontakten versehen werden können.

Eine dritte Ausführung des Sensors ist in Fig. 7 dargestellt, welche ebenfalls einen Schnitt entsprechend Fig. 4 der ersten Ausführung zeigt. Auch hier werden lediglich die Unterschiede zur ersten Ausführung beschrieben.

Auch bei dieser Ausführung sind anstelle der Leiterbahnfolie 9 Leiterbahnen 9' vorgesehen, welche auf einer Trägerplatte 2a angeordnet sind. Die Trägerplatte 2a ist rückseitig durch eine Verstärkungsplatte 2b verstärkt und bildet mit dieser den zweiten Gehäuseteil. Die Trägerplatte 2a ist als Printplatte ausgeführt, in welcher auch die Vertiefung 20 zur Aufnahme des Halbleiterchips angeordnet ist. Vorzugsweise ist der Halbleiterchip in dieser Vertiefung 20 mit einem Klebstoff 38 fixiert, und zwar solcherart, dass ein Druckausgleich zwischen Vorder- und Rückseite der Membran 15 immer noch stattfinden kann. Wiederum sind zur Verbindung zwischen dem Halbleiterchip 3 und den Leiterbahnen 9' z.B. Bonddrähte 35 oder andere Verbindungsleitungen vorgesehen, und die Leiterbahnen bilden auf der Gehäuseaussenseite Anschlussstellen 36, welche z.B. mit Zuführungsdrähten oder Steckkontakten versehen werden können.

Vorzugsweise sind die Leiterbahnen 9' der zweiten und dritten Ausführung ähnlich dünn wie die Leiterbahnfolie 9 der ersten Ausführung, d.h. ihre Dicke beträgt vorzugsweise weniger als 100 µm.

Der Dichtungsring 31 wird gegen die Verstärkungsplatte 2b gedrückt, welche im vorliegenden Fall den Gegenhalter bildet. Die Trägerplatte 2a wird zwischen dem Dichtungsring 31 und der Verstärkungsplatte 2b nach aussen geführt.

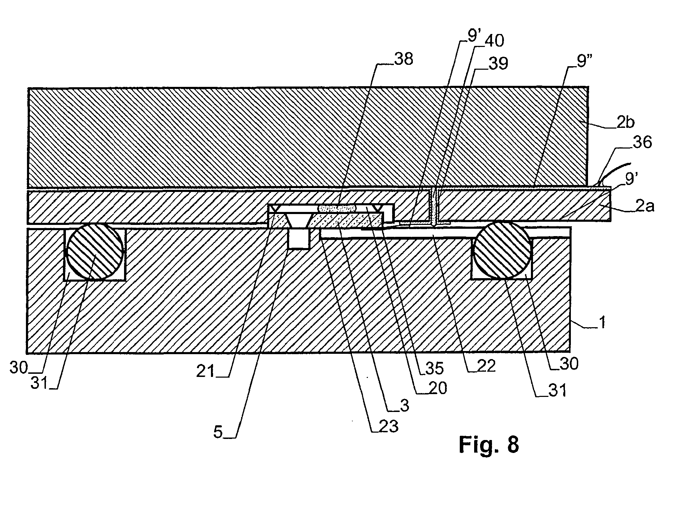

Eine vierte Ausführung des Sensors ist in Fig. 8 dargestellt, welche ebenfalls einen Schnitt entsprechend Fig. 4 der ersten Ausführung zeigt. Die vierte Ausführung entspricht bis auf einige wenige Unterschiede der dritten Ausführung. Die Unterschiede werden im folgenden beschreiben.

In der vierten Ausführung ist die Trägerplatte 2a beidseitig mit Leiterbahnen 9' bzw. 9" versehen. Der Halbleiterchip 3 ist, z.B. mittels Bonddrähten 35, mit Leiterbahnen 9' auf der Unterseite der Trägerplatte 2a verbunden. Die Leiterbahnen 9' enden bei Durchführungen 39, wo sie mit Leiterbahnen 9" auf der Oberseite der Trägerplatte 2a verbunden sind. Die Leiterbahnen 9" werden der Verstärkungsplatte 2b entlang nach aussen geführt, wo sie wiederum Anschlussstellen 36 bilden.

Die Durchführungen 39 sind mit einer Dichtungsmasse 40 gefüllt, so dass ein Druckausgleich zwischen dem Messkanal und der Oberseite der Trägerplatte 2a verhindert wird.

Bei geeigneter Dimensionierung vermag der hier beschriebene Sensor ohne Weiteres einem Druck von mehr als 25 bar standzuhalten. Er eignet sich für Flussmessungen jeglicher Arten bei Gasen und Flüssigkeiten.

## Patentansprüche

1. Flusssensor mit einem Gehäuse mit mindestens zwei Gehäuseteilen (1, 2), zwischen denen ein Messkanal gebildet wird, wobei zwischen den Gehäuseteilen an einer Wand des Messkanals ein Halbleiterchip (3) mit Sensoranordnung angeordnet ist, **dadurch gekennzeichnet,**
**dass** zwischen mindestens zwei der Gehäuseteile (1, 2) ein den Messkanal und den Halbleiterchip (3) umgebender Dichtungsring (31) angeordnet ist, der gegen einen von einem der Gehäuseteile gebildeten Gegenhalter (2, 2b) drückt, wobei mindestens eine mit dem Halbleiterchip verbundene Leiterbahn (9') zwischen dem Dichtungsring (31) und dem Gegenhalter (2, 2b) nach aussen geführt ist,
**dass** der Messkanal als Nut (5) in einer Oberfläche (4) mindestens eines der Gehäuseteile (1, 2) ausgestaltet ist, wobei der Dichtungsring (31) die Nut (5) umgibt, und dass in die Nut (5) zwei Anschlussleitungen (6) münden, wobei sich die Anschlussleitungen (6) durch mindestens einen der Gehäuseteile (1, 2) erstrecken.

2. Flusssensor nach Anspruch 1, **dadurch gekennzeichnet, dass** die Leiterbahn (9') vom Dichtungsring (31) beaufschlagt ist.

3. Flusssensor nach einem der Ansprüche 1 oder 2, **dadurch gekennzeichnet, dass** die mindestens eine Leiterbahn (9') auf einem der Gehäuseteile angeordnet ist.

4. Flusssensor nach Anspruch 3, **gekennzeichnet durch** eine Printplatte (2a), welche eines der Gehäuseteile bildet und auf der die mindestens eine Leiterbahn (9') angeordnet ist.

5. Flusssensor nach Anspruch 4, **dadurch gekennzeichnet, dass** die Printplatte (2a) zwischen dem Dichtungsring (31) und dem Gegenhalter (2b) angeordnet ist.

6. Flusssensor nach einem der Ansprüche 1 oder 2, **dadurch gekennzeichnet, dass** die mindestens eine Leiterbahn (9') auf einer flexiblen Leiterbahnfolie (9) angeordnet ist.

7. Flusssensor nach Anspruch 1, **dadurch gekennzeichnet, dass** der Dichtungsring (31) an der besagten Oberfläche (4), und insbesondere in einer Vertiefung (30) der Oberfläche (4), angeordnet ist.

8. Flusssensor nach einem der vorangehenden Ansprüche, **dadurch gekennzeichnet, dass** der Messkanal als Nut (5) in einer Oberfläche (4) eines ersten Gehäuseteils (1) ausgestaltet ist, dass der Halbleiterchip (3) im wesentlichen bündig mit einer Wand des Messkanals in einer Vertiefung (20) eines zweiten Gehäuseteils (2) liegt und vom ersten Gehäuseteil (1) beaufschlagt wird.

9. Flusssensor nach Anspruch 8, **dadurch gekennzeichnet, dass** zwischen dem Halbleiterchip (3) und einem Boden der Vertiefung (20) mindestens ein Abstandhalter (21) angeordnet ist, wobei der Abstandhalter (21) von einer Andruckkraft, welche die Gehäuseteile (1, 2) aufeinander ausüben, plastisch und/oder elastisch deformiert ist.

10. Flusssensor nach Anspruch 9, **dadurch gekennzeichnet, dass** der Abstandhalter (21) mehrere, vorzugsweise in undeformiertem Zustand spitz zulaufende, Erhebungen im Boden der Vertiefung umfasst, und insbesondere dass die Erhebungen einstückig mit dem zweiten Gehäuseteil (2) ausgeformt sind.

11. Flusssensor nach einem der Ansprüche 8 bis 10, **dadurch gekennzeichnet, dass** die Vertiefung (20) eine Querseite (26b) parallel zum Messkanal aufweist, die an ihren Enden in je eine Ausbuchtung (28a, 28b) mündet, so dass die Querseite (26a) eine gerade Anschlagkante zum Positionieren des Halbleiterchips (3) senkrecht zum Messkanal bildet.

12. Flusssensor nach einem der vorangehenden Ansprüche, **dadurch gekennzeichnet, dass** die Leiterbahn (9') im Bereich des Dichtungsrings (31) mit einer Dichtungsmasse (32) abgedichtet ist.

13. Flusssensor nach einem der vorangehenden Ansprüche, **dadurch gekennzeichnet, dass** der Halbleiterchip (3) eine Membran (15) aufweist, auf welcher die Sensorandordnung angeordnet ist, wobei die Membran beidseitig mit dem Messkanal in Verbindung steht, so dass die über ihr abfallende Druckdifferenz im wesentlichen Null ist.

14. Flusssensor nach einem der vorangehenden Ansprüche, **dadurch gekennzeichnet, dass** der Halbleiterchip (3) näher an einem Ausgangsende (5b) des Messkanals als an einem Eingangsende (5a) des Messkanals angeordnet ist.

## Claims

1. Flow sensor with a casing with at least two casing parts (1, 2), between which a measurement channel is formed, wherein a semiconductor chip (3) with a sensor arrangement is arranged at a wall of the measurement channel between the casing parts, **characterized in**
**that** a sealing ring (31) surrounding the measurement channel and the semiconductor chip (3) is arranged between at least two of the casing parts (1, 2), which sealing ring (31) pushes against a counterholder (2, 2b) formed by one of the casing parts, wherein at least one circuit path (9') connected to the semiconductor chip is guided to the outside between the sealing ring (31) and the conterholder (2, 2b), and
**that** the measurement channel is formed as a notch (5) in a surface (4) of at least one of the casing parts (1, 2), wherein the sealing ring (31) surrounds the notch (5), and that two connecting pipes (6) open into the notch (5), wherein the connecting pipes (6) extend through at least one of the casing parts (1, 2).

2. Flow sensor according to claim 1, **characterized in that** the sealing ring (31) acts upon the circuit path (9').

3. Flow sensor according to one of the claims 1 or 2, **characterized in that** the at least one circuit path (9') is arranged on one of the casing parts.

4. Flow sensor according to claim 3, **characterized by** a printed board (2a) which forms one of the casing parts and on which the at least one circuit path (9') is arranged.

5. Flow sensor according to claim 4, **characterized in that** the printed board (2a) is arranged between the sealing ring (31) and the counterholder (2b).

6. Flow sensor according to one of the claims 1 or 2, **characterized in that** the at least one circuit path (9') is arranged on a flexible circuit path foil (9).

7. Flow sensor according to claim 1, **characterized in that** the sealing ring (31) is arranged at said surface (4), and particularly in a cavity (30) of the surface (4).

8. Flow sensor according to one of the preceding claims, **characterized in that** the measurement channel is formed as a notch (5) in a surface (4) of a first casing part (1), that the semiconductor chip (3) is arranged in a cavity (20) of a second casing part (2) substantially aligned with a wall of the measurement channel, and that the first casing part (1) acts upon the semiconductor chip (4).

9. Flow sensor according to claim 8, **characterized in that** at least one spacer (21) is arranged between the semiconductor chip (3) and a bottom of the cavity (20), wherein the spacer (21) is elastically and/or plastically deformed by a pressing force exerted by the casing parts (1, 2) onto one another.

10. Flow sensor according to claim 9, **characterized in that** the spacer (21) comprises a plurality of protrusions on the bottom of the cavity, preferably tapering in an undeformed state, and particularly that the protrusions are in one piece with the second casing part (2).

11. Flow sensor according to one of the claims 8 to 10, **characterized in that** the cavity (20) has a transversal side (26b) which is parallel to the measurement channel, which opens at each of its ends into a corresponding bulge (28a, 28b), such that the transversal side (26a) forms a straight abutment edge for positioning the semiconductor chip (3) perpendicular to the measurement channel.

12. Flow sensor according to one of the preceding claims, **characterized in that** the circuit path (9') is sealed with a sealing compound (32) in the area of the sealing ring (31).

13. Flow sensor according to one of the preceding claims, **characterized in that** the semiconductor chip (3) has a membrane (15) on which the sensor arrangement is arranged, wherein the membrane is in connection with the measurement channel on both sides, such that the pressure difference exerted thereon is substantially zero.

14. Flow sensor according to one of the preceding claims, **characterized in that** the semiconductor chip (3) is arranged closer to an outlet end (5b) of the measurement channel than to an inlet end (5a) of the measurement channel.

## Revendications

1. Capteur d'écoulement avec une carcasse avec au moins deux parties de carcasse (1, 2), entre lesquelles un canal de mesure est formé, une puce semi-conductrice (3) avec un arrangement de capteur étant arrangée entre les parties de carcasse à côté d'une paroi du canal de mesure, **caractérisé en ce que**
un anneau d'étanchéité (31) entourant le canal de mesure et la puce semi-conductrice (3) est arrangé entre au moins deux des parties de carcasse (1, 2), poussant contre un contre-appui (2, 2b) formé par une des parties de carcasse, au moins une piste conductrice (9') connectée à la puce semi-conductrice étant guidée vers l'extérieur entre l'anneau d'étanchéité (31) et le contre-appui (2, 2b) et **en ce que**
le canal de mesure a une forme de rainure (5) dans une surface (4) d'au moins une des parties de carcasse (1, 2), l'anneau d'étanchéité (31) entourant la rainure (5), et **en ce que** deux lignes de connexion (6) ouvrent dans la rainure (5), les lignes de connexion (6) s'étendant à travers au moins une des parties de carcasse (1, 2).

2. Capteur d'écoulement selon la revendication 1, **caractérisé en ce que** la piste conductrice (9') est pressurisée par l'anneau d'étanchéité (31).

3. Capteur d'écoulement selon l'une des revendications 1 ou 2, **caractérisé en ce qu'**au moins l'une piste conductrice (9') est arrangée sur l'une des parties de carcasse.

4. Capteur d'écoulement selon la revendication 3, **caractérisé par** une plaque d'impression (2a) formant au moins une des parties de carcasse et sur laquelle l'au moins une piste conductrice (9') est arrangée.

5. Capteur d'écoulement selon la revendication 4, **caractérisé en ce que** la plaque d'impression (2a) est arrangée entre l'anneau d'étanchéité (31) et le contre-appui (2b).

6. Capteur d'écoulement selon l'une des revendications 1 ou 2, **caractérisé en ce qu'**au moins une piste conductrice (9') est arrangée sur une feuille flexible de piste conductrice (9).

7. Capteur d'écoulement selon la revendication 1, **caractérisé en ce que** l'anneau d'étanchéité (31) est arrangé à côté de ladite surface (4), et particulièrement dans une cavité (30) de la surface (4).

8. Capteur d'écoulement selon l'une des revendications précédentes, **caractérisé en ce que** le canal de mesure a une forme de rainure (5) dans une surface (4) d'une première partie de carcasse (1), **en ce que** la puce semi-conductrice (3) est posée essentiellement de manière alignée avec une paroi du canal de mesure dans une cavité (20) d'une deuxième partie de carcasse (2) et est pressurisée par la première partie de carcasse (1).

9. Capteur d'écoulement selon la revendication 8, **caractérisé en ce qu'**au moins un écarteur (21) est arrangé entre la puce semi-conductrice (3) et un fond de la cavité (20), l'écarteur (21) étant déformé de manière élastique et/ou plastique par une force pressante exercée par les parties de carcasse (1, 2) l'une sur l'autre.

10. Capteur d'écoulement selon la revendication 9, **caractérisé en ce que** l'écarteur (21) comprend une pluralité de saillies, préférablement s'effilant dans un état non-déformé, au fond de la cavité, et particulièrement **en ce que** les saillies sont solidaires de la deuxième partie de carcasse (2).

11. Capteur d'écoulement selon l'une des revendications 8 à 10, **caractérisé en ce que** la cavité (20) a une partie transversale (26b) parallèle au canal de mesure, qui s'ouvre de chaque côté de ses extrémités dans un correspondant cambrement (28a, 28b), de sorte que la face transversale (26a) forme une arête de butée droite afin de positionner la puce semi-conductrice (3) de manière perpendiculaire par rapport au canal de mesure.

12. Capteur d'écoulement selon l'une des revendications précédentes, **caractérisé en ce que** la piste conductrice (9') est étanchée avec un matériau d'étanchéité (32) dans la zone de l'anneau d'étanchéité (31).

13. Capteur d'écoulement selon l'une des revendications précédentes, **caractérisé en ce que** la puce semi-conductrice (3) a une membrane (15) sur laquelle l'arrangement de capteur est arrangé, la membrane ayant une connexion des deux côtés avec le canal de mesure, de sorte que la différence de pression exercée sur elle-même soit essentiellement zéro.

14. Capteur d'écoulement selon l'une des revendications précédentes, **caractérisé en ce que** la puce semi-conductrice (3) est arrangée plus près d'une extrémité de sortie (5b) du canal de mesure que d'une extrémité d'entrée (5a) du canal de mesure.
